# EUROPEAN PATENT APPLICATION

(11) **EP 4 746 516 A1**
(43) Date of publication of application: **20.05.2026**
(21) Application number: 24851011.7
(22) Date of filing: 06.08.2024
(51) Int. Cl.: H04W 36/00

(54) **COMMUNICATION METHOD AND RELATED APPARATUS**

(30) Priority: 08.08.2023 CN 202310997578
(71) Applicant: Huawei Technologies Co., Ltd., Shenzhen, Guangdong 518129 (CN)
(72) Inventor: LI, Jiaojiao, Shenzhen, Guangdong 518129 (CN); QIANG, Li, Shenzhen, Guangdong 518129 (CN); LI, Bingzhao, Shenzhen, Guangdong 518129 (CN); LIU, Nannan, Shenzhen, Guangdong 518129 (CN)
(74) Representative: Goddar, Heinz J.
(86) International application number: PCT/CN2024/110154
(87) International publication number: WO 2025/031366

(57) **Abstract**

A communication method and a related apparatus are provided. The method includes: obtaining first indication information, where the first indication information indicates to perform layer 1/layer 2-triggered cell switch to a target cell; and when determining not to re-establish RLC, setting a value of a first state variable to a first value, where the first state variable is used to count a quantity of retransmissions of a data unit or a data unit segment, and/or, when determining not to re-establish the RLC, setting a value of a first parameter to a second value, where the first parameter is used to limit a quantity of retransmissions of a data unit or a data unit segment. The method in this application helps reduce a transmission delay.

## Description

This application claims priority to Chinese Patent Application No. 202310997578.8, filed with the China National Intellectual Property Administration on August 8, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Currently, for a scenario in which a data amount is large or a scenario in which switch frequently occurs, to reduce switch delays and interruption time, layer 1 (layer 1, L1)/layer 2 (layer 2, L2)-triggered mobility (or referred to as LTM switch) is proposed in conventional technologies. The LTM switch is a switch procedure of indicating a terminal device, by using L1 signaling (for example, downlink control information (downlink control information, DCI)) or L2 signaling (for example, a medium access control control element (medium access control control element, MAC CE)), to perform cell switch. The LTM switch procedure includes current LTM switch within a same central unit (central unit, CU), specifically including intra-CU inter-distributed unit (distributed unit, DU) (intra-CU inter-DU) LTM switch and intra-CU intra-DU (intra-CU intra-DU) LTM switch.

In an intra-CU intra-DU switch scenario, because a radio link control (radio link control, RLC) entity for a source cell and a target cell does not change, RLC re-establishment may not be performed during the intra-CU intra-DU switch. This helps reduce switch delays and interruption time. However, when RLC re-establishment is not performed, a radio link failure (radio link failure, RLF) may be triggered, resulting in a radio link interruption, and further resulting in a service interruption. Consequently, a service transmission delay is increased. In addition, when RLC re-establishment is not performed, a data packet cannot be retransmitted at a medium access control (medium access control, MAC) layer due to MAC reset. In addition, because the RLC entity cannot trigger an RLC status report in time, the data packet cannot be retransmitted. This also increases the service transmission delay.

### SUMMARY

This application provides a communication method and a related apparatus, to reduce a transmission delay.

According to a first aspect, this application provides a communication method, and the method is performed by a transmitter. The transmitter may be a transmitter, or may be a unit or module (for example, a chip) that has a corresponding function in the transmitter. In the method, the transmitter obtains first indication information, where the first indication information indicates to perform layer 1/layer 2-triggered cell switch to a target cell; and when determining not to re-establish radio link control RLC, the transmitter sets a value of a first state variable to a first value, where the first state variable is used to count a quantity of retransmissions of a data unit or a data unit segment, and/or, when determining not to re-establish the RLC, the transmitter sets a value of a first parameter to a second value, where the first parameter is used to limit a quantity of retransmissions of a data unit or a data unit segment.

In a possible design, the first state variable is an RLC retransmission counter.

In a possible design, the first parameter may be a maximum quantity of RLC retransmissions.

During or after the transmitter performs an LTM procedure, when the RLC remains unchanged (or re-establishment is not performed), an RLC entity remains unchanged except for the RLC retransmission counter, and/or the maximum quantity of RLC retransmissions is assigned a positive integer greater than an original value. This ensures that a transmission delay is reduced, and avoids mistakenly triggering an RLF after a terminal device accesses a new cell.

In a possible design, the determining not to re-establish the RLC is specifically:
determining not to re-establish the RLC and not to establish the RLC.

In this implementation, not establishing the RLC means that no new RLC is established. When it is determined not to re-establish the RLC and not to establish the RLC, the value of the first state variable is set to the first value, and/or when it is determined not to re-establish the RLC and not to establish the RLC, the value of the first parameter is set to the second value, so that the transmission delay can be reduced.

In a possible design, the method further includes:
obtaining second indication information, where the second indication information indicates not to re-establish the RLC, or the second indication information indicates one or more of the following:
setting the value of the first state variable to the first value,
storing a data unit stored in the RLC,
maintaining an RLC timer, or
maintaining a second state variable, where the second state variable is an RLC state variable other than the first state variable.

In this implementation, the transmitter may determine, based on the additional second indication information, whether to re-establish the RLC, and applicability is high.

In a possible design, the method further includes:
when the target cell and a serving cell are associated with a same identifier, determining not to re-establish the RLC.

In this implementation, the transmitter may determine, based on whether the target cell and the serving cell are associated with a same identifier, whether to re-establish the RLC, and operability is high.

In a possible design, the setting the value of the first state variable to the first value includes:
when the value of the first state variable is greater than or equal to a first threshold, setting the value of the first state variable to the first value.

In this implementation, when the value of the first state variable is greater than or equal to the first threshold, the value of the first state variable is set to the first value, to avoid resetting the value of the first state variable when the value of the first state variable is small.

In a possible design, the first value is 0, or the first value is an integer greater than 0.

In a possible design, the second value is an integer greater than 0.

In a possible design, the obtaining the first indication information is specifically:
when the transmitter is a terminal device, receiving, by the terminal device, the first indication information; or
when the transmitter is a network device, sending, by the network device, the first indication information.

According to a second aspect, this application provides a communication method, and the method is performed by a receiver. The receiver may be a receiver, or may be a unit or module (for example, a chip) that has a corresponding function in the receiver. In the method, the receiver obtains first indication information, where the first indication information indicates to perform layer 1/layer 2-triggered cell switch to a target cell; and when determining not to re-establish radio link control RLC, the receiver determines that a first timer expires, where the first timer is used to perform detection of loss of a data unit at lower layer.

In a possible design, the first timer may be an RLC reassembly timer.

In this manner, when the RLC is indicated to remain unchanged (or not to be re-established), the RLC reassembly timer is considered to expire, so that an RLC status report can be triggered in time. This accelerates retransmission of an RLC service data unit (service data unit, SDU), and helps reduce a transmission delay.

In a possible design, the determining not to re-establish the RLC is specifically:
determining not to re-establish the RLC and determining to reset medium access control MAC.

In this implementation, when the RLC is indicated to remain unchanged (or not to be re-established) and the MAC is indicated to be reset, the RLC t-Reassembly timer is considered to expire, so that the RLC status report can be triggered in time. This accelerates retransmission of the RLC SDU, and helps reduce the transmission delay.

In a possible design, the determining that the first timer expires is specifically:
determining that the first timer and a second timer expire, where the second timer is used to prohibit sending of the RLC status report.

In this implementation, the second timer may be a t-StatusProhibit timer. In other words, when the RLC is indicated to remain unchanged (or not to be re-established), or when the RLC is indicated to remain unchanged (or not to be re-established) and the MAC is indicated to be reset, in this embodiment of this application, the RLC t-Reassembly timer and the t-StatusProhibit timer may be further considered to expire, so that the RLC status report can be triggered and sent in time. This accelerates retransmission of the RLC SDU, and helps reduce the transmission delay.

In a possible design, the method further includes:
obtaining third indication information, where the third indication information indicates not to re-establish the RLC; or
when the target cell and a serving cell are associated with a same identifier, determining not to re-establish the RLC.

In this implementation, a transmitter may determine, based on the additional third indication information, whether to re-establish the RLC, or determine, based on whether the target cell and the serving cell are associated with a same identifier, whether to re-establish the RLC. Implementation solutions are diversified, and applicability is high.

In a possible design, the method further includes:
obtaining fourth indication information, where the fourth indication information indicates to reset the MAC; or
when the target cell and the serving cell are associated with a same identifier, determining to reset the MAC.

In this implementation, the transmitter may determine, based on the additional third indication information, whether to reset the MAC, or determine, based on whether the target cell and the serving cell are associated with a same identifier, whether to reset the MAC. Implementation solutions are diversified, and applicability is high.

In a possible design, the obtaining the first indication information is specifically:
when the receiver is a terminal device, receiving, by the terminal device, the first indication information; or
when the receiver is a network device, sending, by the network device, the first indication information.

According to a third aspect, this application provides a communication apparatus. The communication apparatus may be a communication apparatus, or a module, a chip, or a unit in the communication apparatus. The communication apparatus includes:
a transceiver unit, configured to obtain first indication information, where the first indication information indicates to perform layer 1/layer 2-triggered cell switch to a target cell; and
a processing unit, configured to: when determining not to re-establish radio link control RLC, set a value of a first state variable to a first value, where the first state variable is used to count a quantity of retransmissions of a data unit or a data unit segment, and/or when determining not to re-establish the RLC, set a value of a first parameter to a second value, where the first parameter is used to limit a quantity of retransmissions of a data unit or a data unit segment.

In a possible design, the determining not to re-establish the RLC is specifically:
determining not to re-establish the RLC and not to establish the RLC.

In a possible design, the transceiver unit is further configured to:
obtain second indication information, where the second indication information indicates not to re-establish the RLC, or the second indication information indicates one or more of the following:
setting the value of the first state variable to the first value,
storing a data unit stored in the RLC,
maintaining an RLC timer, or
maintaining a second state variable, where the second state variable is an RLC state variable other than the first state variable.

In a possible design, the processing unit is further configured to:
when the target cell and a serving cell are associated with a same identifier, determine not to re-establish the RLC.

In a possible design, when setting the value of the first state variable to the first value, the processing unit is configured to:
when the value of the first state variable is greater than or equal to a first threshold, set the value of the first state variable to the first value.

In a possible design, the first value is 0, or the first value is an integer greater than 0.

In a possible design, the second value is an integer greater than 0.

In a possible design, when the first indication information is obtained:
When a transmitter is a terminal device, a transceiver unit of the terminal device is configured to receive the first indication information; or
when the transmitter is a network device, a transceiver unit of the network device is configured to send the first indication information.

According to a fourth aspect, this application provides a communication apparatus. The communication apparatus may be a communication apparatus, or a module, a chip, or a unit in the communication apparatus. The communication apparatus includes:
a transceiver unit, configured to obtain first indication information, where the first indication information indicates to perform layer 1/layer 2-triggered cell switch to a target cell; and
a processing unit, configured to: when determining not to re-establish radio link control RLC, determine that a first timer expires, where the first timer is used to perform detection of loss of a data unit at a lower layer.

In a possible design, the determining not to re-establish the RLC is specifically:
determining not to re-establish the RLC and determining to reset medium access control MAC.

In a possible design, when determining that the first timer expires, the processing unit is configured to:
determine that the first timer and a second timer expire, where the second timer is used to prohibit sending of an RLC status report.

In a possible design, the processing unit is further configured to:
obtain third indication information, where the third indication information indicates not to re-establish the RLC; or
when the target cell and a serving cell are associated with a same identifier, determine not to re-establish the RLC.

In a possible design, the processing unit is further configured to:
obtain fourth indication information, where the fourth indication information indicates to reset the MAC; or
when the target cell and the serving cell are associated with a same identifier, determine to reset the MAC.

In a possible design, when the first indication information is obtained:
When a receiver is a terminal device, a transceiver unit of the terminal device is configured to receive the first indication information; or
when the receiver is a network device, a transceiver unit of the network device is configured to send the first indication information.

According to a fifth aspect, this application provides a communication apparatus. The communication apparatus includes a processor, and the processor is configured to execute a computer program, to cause the communication apparatus to perform the method according to any item in either the first aspect or the second aspect.

In a possible design, the communication apparatus may be a chip implementing the method according to either the first aspect or the second aspect or a device including the chip.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory. Optionally, the processor and the memory may be integrated together.

According to a sixth aspect, this application provides a communication apparatus. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to any item in either the first aspect or the second aspect by using a logic circuit or by executing code instructions.

According to a seventh aspect, this application provides a computer-readable storage medium. The storage medium stores a computer program or instructions. When the computer program or the instructions are executed by a computer, the method according to any item in either the first aspect or the second aspect is implemented.

According to an eighth aspect, this application provides a computer program product. When a computer reads and executes the computer program product, the computer is caused to perform the method according to any item in either the first aspect or the second aspect.

According to a ninth aspect, this application provides a communication system. The communication system includes a communication apparatus configured to implement the method according to any item in the first aspect, and includes a communication apparatus configured to implement the method according to any item in the second aspect.

According to a tenth aspect, this application provides a communication method. In the method, if a transmitter is a terminal device, and a receiver is a network device,
the network device sends first indication information to the terminal device, where the first indication information indicates to perform layer 1/layer 2-triggered cell switch to a target cell; and
when determining not to re-establish radio link control RLC, the terminal device sets a value of a first state variable to a first value, where the first state variable is used to count a quantity of retransmissions of a data unit or a data unit segment, and/or when determining not to re-establish the RLC, the terminal device sets a value of a first parameter to a second value, where the first parameter is used to limit a quantity of retransmissions of a data unit or a data unit segment.

According to an eleventh aspect, this application provides a communication method. In the method, if a transmitter is a network device, and a receiver is a terminal device,
the network device sends first indication information to the terminal device, where the first indication information indicates to perform layer 1/layer 2-triggered cell switch to a target cell; and
when determining not to re-establish radio link control RLC, the terminal device determines that a first timer expires, where the first timer is used to perform detection of loss of a data unit at a lower layer.

For beneficial effects of the second aspect to the eleventh aspect, refer to the beneficial effects of the first aspect. Details are not described herein again.

### BRIEF DESCRIPTION OF DRAWINGS

FIG. 1 is a diagram of an architecture of a communication system to which an embodiment of this application is applied;
FIG. 2 is a diagram of a CU/DU split architecture according to an embodiment of this application;
FIG. 3 is a diagram of a HARQ principle according to an embodiment of this application;
FIG. 4 is a schematic flowchart of intra-CU intra-DU L1/L2 switch according to an embodiment of this application;
FIG. 5 is a diagram of a scenario in which RLC remains unchanged and MAC is reset;
FIG. 6 is a schematic flowchart of a communication method according to an embodiment of this application;
FIG. 7 is another schematic flowchart of a communication method according to an embodiment of this application;
FIG. 8 is another schematic flowchart of a communication method according to an embodiment of this application;
FIG. 9 is another schematic flowchart of a communication method according to an embodiment of this application;
FIG. 10 is another schematic flowchart of a communication method according to an embodiment of this application;
FIG. 11 is another schematic flowchart of a communication method according to an embodiment of this application;
FIG. 12 is a diagram of a possible structure of a communication apparatus according to an embodiment of this application; and
FIG. 13 is a diagram of a possible structure of a communication apparatus according to an embodiment of this application.

### DESCRIPTION OF EMBODIMENTS

The following further describes specific embodiments of this application in detail with reference to the accompanying drawings.

The terms "first", "second", and the like in the specification, claims, and accompanying drawings of this application are used to distinguish between different objects, but are not used to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one (piece) of a, b, or c may indicate a, b, c, "a and b", "a and c", "b and c", or "a, b, and c", where a, b, and c may be singular or plural.

In this application, "sending information to... (for example, a terminal)" may be understood as that a destination end of the information is the terminal, and may include directly or indirectly sending the information to the terminal. "Receiving information from... (for example, a terminal)" or "receiving information that is from... (for example, a terminal)" may be understood as that a source end of the information is the terminal, and may include directly or indirectly receiving the information from the terminal. Information may undergo necessary processing, for example, a format change, between the source end for sending the information and the destination end. However, the destination end may understand valid information from the source end. A similar expression in this application may be understood similarly. Details are not described herein again.

To better understand embodiments of this application, the following first describes a system architecture in embodiments of this application.

The technical solutions of this application may be applied to a non-terrestrial network (non-terrestrial network, NTN) or a scenario in which an NTN and a terrestrial network (terrestrial network, TN) are integrated. An NTN system may be, for example, a satellite communication system, a high altitude platform (high altitude platform station, HAPS) communication system, or a global navigation satellite system (global navigation satellite system, GNSS). A TN system may be, for example, a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a 6th generation mobile communication (6th generation mobile communication, 6G) system, or a future mobile communication system.

The communication system provided in this application may include one or more network devices and one or more terminals.

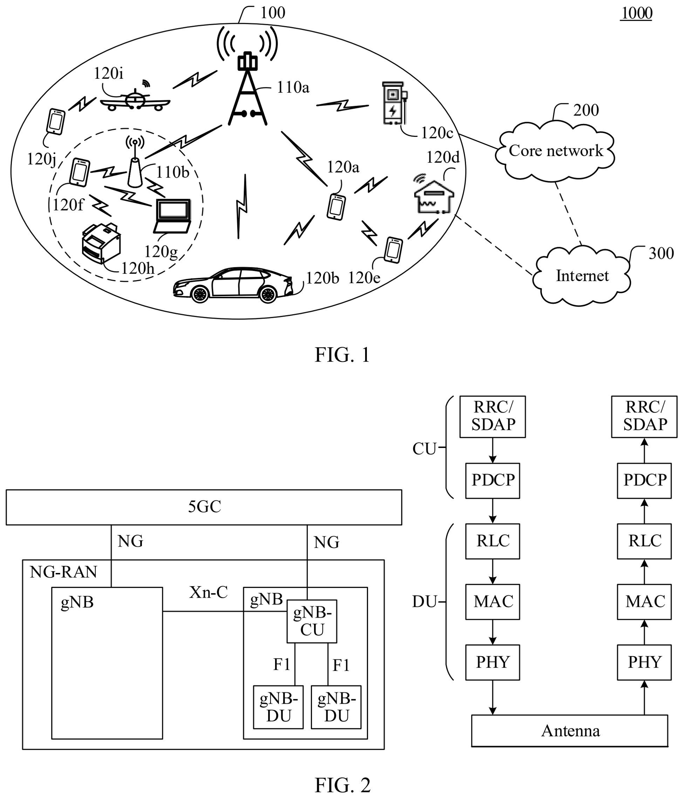

The following uses a system architecture shown in FIG. 1 as an example for description. FIG. 1 is a diagram of an architecture of a communication system to which an embodiment of this application is applied. As shown in FIG. 1, the communication system 1000 includes a radio access network (radio access network, RAN) 100 and a core network (core network, CN) 200. Optionally, the communication system 1000 may further include an internet 300. The RAN 100 includes at least one network device (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the network device 110 in a wireless manner. The network device 110 is connected to the core network 200 in a wireless or wired manner. A core network device in the core network 200 and the network device 110 in the RAN 100 may respectively be different physical devices, or may be a same physical device that integrates a logical function of the core network and a logical function of the radio access network.

It should be noted that the RAN 100 may be a cellular system related to the 3rd generation partnership project (3rd generation partnership project, 3GPP), for example, a 4G mobile communication system, a 5G mobile communication system, or a system evolved after 5G (for example, a 6G mobile communication system). The RAN 100 may alternatively be an open access network (open RAN, O-RAN, or ORAN), a cloud radio access network (cloud radio access network, CRAN), or the like. The RAN 100 may alternatively be a communication system that integrates two or more of the foregoing systems. It should be noted that quantities of network devices and terminals in FIG. 1 are merely examples, and should not be considered as a specific limitation on this application. The following describes in detail the terminal and the network device that are related to the system architecture.

### 1. Terminal

The terminal may also be referred to as a terminal device, user equipment (user equipment, UE), a mobile station (mobile station, MS), a mobile terminal (mobile terminal, MT) device, a mobile terminal, mobile equipment (mobile equipment, ME), an access terminal, a subscriber unit, a subscriber station, a mobile station, a remote station, a remote terminal, a user terminal, a wireless communication device, a user agent, a user apparatus, or the like, or a device configured to provide voice or data connectivity for a user, or may be an internet of things device. For example, the terminal device includes a hand-held device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a car, a bicycle, an electric vehicle, an airplane, a ship, a train, or a high-speed train), a satellite terminal device, a virtual reality (virtual reality, VR) device, an augmented reality (augmented reality, AR) device, a smart point of sale (point of sale, POS) machine, customer-premises equipment (customer-premises equipment, CPE), a wireless terminal device in industrial control, a smart home device (for example, a refrigerator, a television, an air conditioner, or an electricity meter), a smart robot, a robot arm, a workshop device, a wireless terminal device in self-driving, a wireless terminal device in telemedicine, a wireless terminal device in a smart grid (smart grid), a wireless terminal device in transportation safety, a wireless terminal device in a smart city, a wireless terminal device in a smart home, a flight device (for example, a smart robot, a hot air balloon, an uncrewed aerial vehicle, or an airplane), or the like. Alternatively, the terminal device may be another device that has a terminal device function. For example, the terminal device may alternatively be a device that functions as a terminal device in D2D communication. A device form of the terminal device is not limited in embodiments of this application. An apparatus configured to implement a function of the terminal device may be a terminal device, or may be an apparatus that can support the terminal device in implementing the function, for example, a chip system. The apparatus may be mounted in the terminal device or used in cooperation with the terminal device. In this embodiment of this application, the chip system may include a chip, or may include a chip and another discrete device.

### 2. Network device

The network device is a node in a radio access network (radio access network, RAN), and may also be referred to as an access network device or a RAN node (or device). The network device is configured to help the terminal device implement radio access. A plurality of network devices 110 in the communication system 1000 may be nodes of a same type, or may be nodes of different types. In some scenarios, roles of the network device 110 and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The network device 110 and the terminal device 120 are sometimes referred to as communication apparatuses. For example, the network elements 110a and 110b in FIG. 1 may be understood as communication apparatuses having a base station function, and the network elements 120a to 120j may be understood as communication apparatuses having a terminal device function.

In a possible scenario, the network device may be a device having a base station function, for example, an evolved NodeB (evolved NodeB, eNodeB), a transmission reception point (transmitting and receiving point, TRP), a transmitting point (transmitting point, TP), a next generation NodeB (next generation NodeB, gNB), a next generation base station in a 6G mobile communication system, an integrated access and backhaul (integrated access and backhaul, IAB) node, or a non-terrestrial network device in an NTN, that is, a device that may be deployed on a high altitude platform or a satellite, or the like. The network device may be a macro base station (for example, 110a in FIG. 1), a micro base station or an indoor base station (for example, 110b in FIG. 1), a relay node or a donor node, or a radio controller in a CRAN scenario. The network device may alternatively be a device that functions as a base station in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, a network device in a vehicle-to-everything (vehicle-to-everything, V2X) technology may be a road side unit (road side unit, RSU).

All or some functions of the network device in this application may alternatively be implemented by using a software function running on hardware, or may be implemented by using a virtualization function instantiated on a platform (for example, a cloud platform). The network device in this application may alternatively be a logical node, a logical module, or software that can implement all or some functions of the network device.

In another possible scenario, a plurality of network devices collaborate to assist the terminal device in implementing radio access, and different network devices separately implement some functions of the base station. For example, the network device may include a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

For example, FIG. 2 is a diagram of a CU/DU split architecture according to an embodiment of this application. As shown in FIG. 2, a DU includes a physical layer (physical layer, PHY), a media access control (media access control, MAC) layer, and a radio link control (radio link control, RLC) layer. A CU includes a packet data convergence protocol (packet data convergence protocol, PDCP) layer, a radio resource control (radio resource control, RRC) layer, and a service data adaptation protocol (service data adaptation protocol, SDAP) layer. Based on protocol stack layering, a layer 1 (layer 1, L1) is the physical layer, a layer 2 (layer 2, L2) includes the MAC layer, the RLC layer, and the PDCP layer, and a layer 3 is the RRC layer/SDAP layer.

Main functions of the PHY layer include functions such as a physical layer channel, multiple access multiplexing, modulation, channel coding, and physical layer measurement.

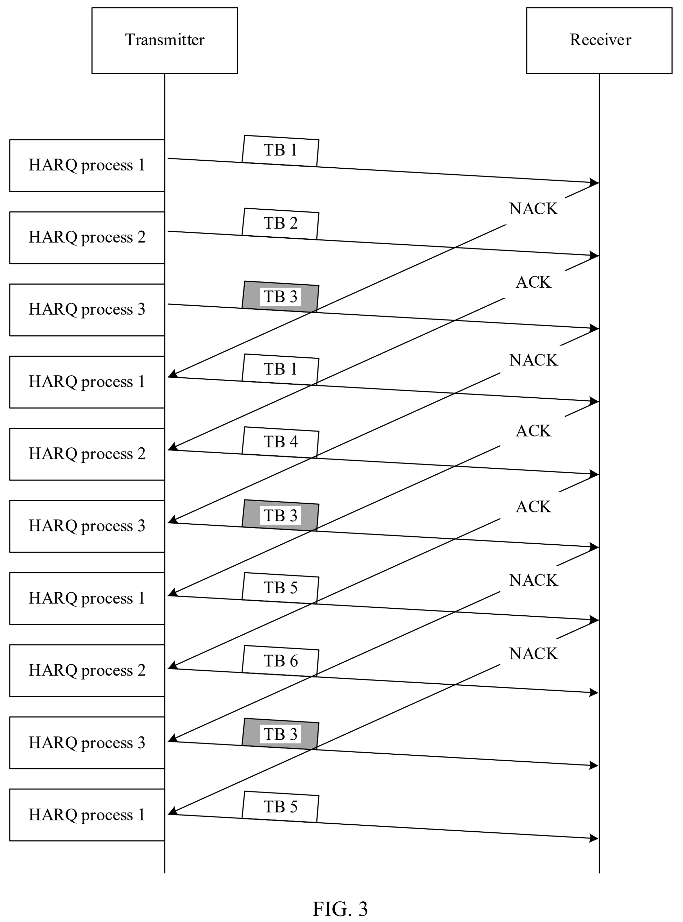

Main functions of the MAC layer include scheduling, multiplexing, and a hybrid automatic repeat request (hybrid automatic repeat request, HARQ) process. The HARQ process is a technology that combines a forward error correction (forward error correction, FEC) and an automatic repeat request (automatic repeat request, ARQ) method. For example, as shown in FIG. 3, a transmitter may simultaneously maintain a plurality of HARQ processes. If a transport block (transport block, TB) in a HARQ process is correctly and successfully sent, a receiver feeds back a reception success (acknowledgement, ACK), and in the HARQ process, the transmitter may send a new TB. If a TB fails to be sent or is incorrectly sent in a HARQ process, the receiver feeds back a reception failure (negative acknowledgement, NACK), and in the HARQ process, the transmitter retransmits the TB. Each HARQ process is associated with a HARQ buffer on the receiver, and the HARQ buffer is used to perform soft combination on received data. For example, in FIG. 3, because a TB 3 transmitted in a HARQ process 3 fails to be transmitted a plurality of times, the receiver may receive the TB 3 a plurality of times. The receiver may store the TB 3 received by the receiver in a soft buffer (soft buffer) of the process 3, and attempt to combine and decode the TB 3 until the receiver successfully decodes the TB 3.

Main functions of the RLC layer include data segmentation and an automatic repeat request (automatic repeat request, ARQ). The ARQ is applicable to a radio bearer in an acknowledged mode (acknowledged mode, AM). Details are described in the following key terms.

Main functions of the PDCP layer include compression/decompression, security processing, and the like.

Main functions of the RRC layer include broadcast and receiving of system information, RRC connection control, inter-RAT mobility, measurement configuration and reporting, and the like.

Main functions of the SDAP layer include mapping of a quality of service (quality of service, QoS) flow to a radio bearer, and the like.

In different systems, the CU (or a CU-CP and a CU-UP), the DU, or an RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or and CU-UP), the DU, and the RU in this application may be implemented by using a software module, a hardware module, or a combination of a software module and a hardware module.

A form of a network device is not limited in embodiments of this application. An apparatus configured to implement a function of the network device may be a network device, or may be an apparatus that can support the network device in implementing the function, for example, a chip system. The apparatus may be mounted in the network device or used in cooperation with the network device.

To facilitate understanding of content of the solutions, the following further explains and describes some terms in embodiments of this application, to facilitate understanding by a person skilled in the art. This part is merely for ease of understanding, and cannot be considered as a specific limitation on this application.

### 1. RLC

### (1) Retransmission of an acknowledged mode (acknowledged mode, AM) RLC entity:

A transmitting side of the AM RLC entity generates one or more acknowledged mode data protocol data units (acknowledged mode data protocol data units, AMD PDUs) for each RLC service data unit (service data unit, SDU). The transmitting side of the AM RLC entity supports retransmission (ARQ) of RLC SDUs or RLC SDU segments.

When a receiving side of the AM RLC entity receives AMD PDUs, the receiving side shall:
① perform detection of whether duplicate AMD PDUs have been received and discard the duplicate AMD PDUs;
② perform detection of loss of AMD PDUs at a lower layer and request retransmission to a peer AM RLC entity of the AM RLC entity; and
③ reassemble RLC SDUs from the received AMD PDUs and deliver the RLC SDUs to an upper layer.

It may be understood that an ARQ procedure is an automatic repeat request procedure. The transmitting side of the AM RLC entity may receive a negative acknowledgement (which may be understood as a notification of a reception failure of the peer AM RLC entity of the AM RLC entity) for an RLC SDU or an RLC SDU segment in the following manner: receiving a STATUS PDU (which may also be referred to as a status report) from the peer AM RLC entity of the AM RLC entity.

It may be understood that a lower layer of the RLC layer is a MAC layer and/or a physical layer.

When receiving the negative acknowledgement for the RLC SDU or the RLC SDU segment by using the STATUS PDU from the peer AM RLC entity of the AM RLC entity, the transmitting side of the AM RLC entity shall consider, for retransmission, the RLC SDU or the RLC SDU segment for which the negative acknowledgement is received. When the RLC SDU or the RLC SDU segment is considered for retransmission, the transmitting side of the AM RLC entity shall:
if the RLC SDU or the RLC SDU segment is considered for retransmission for the first time, set RETX_COUNT associated with the RLC SDU to 0; or otherwise if the RLC SDU or the RLC SDU segment that is considered for retransmission is not pending for retransmission already and RETX_COUNT associated with the RLC SDU is not increased due to another negative acknowledgement in a same STATUS PDU, increase RETX_COUNT by 1; and if RETX_COUNT=maxRetxThreshold, indicate, to an upper layer, that a maximum quantity of retransmissions has been reached.

RETX_COUNT (a retransmission counter) is a state variable (or a counter) maintained by an RLC entity of a transmitter, and is used to count a quantity of retransmissions of an RLC SDU or an RLC SDU segment. The RLC entity maintains an RETX_COUNT counter for each RLC SDU. maxRetxThreshold (the maximum quantity of retransmissions) is a parameter configured by a network. The RLC entity of the transmitter uses the parameter to limit a quantity of retransmissions of an RLC SDU (including a segment of the RLC SDU). For example, maxRetxThreshold may be equal to 1, 2, 3, 4, 8, 16, and 32.

If the upper layer (for example, an RRC layer) receives an indication indicating that the maximum quantity of retransmissions is reached, it is considered that a radio link failure (radio link failure, RLF) is detected. UE may further initiate an RRC connection re-establishment procedure. It may be understood that when a quantity of retransmissions of an RLC SDU reaches a specific quantity, it indicates, to some extent, that the RLC SDU cannot be correctly transmitted under current quality of a radio link. To ensure lossless transmission of the RLC SDU in the AM mode, the transmitter may consider that a radio link failure (radio link failure, RLF) is detected, and recover the radio link by using a corresponding operation (for example, RRC connection re-establishment) procedure.

### (2) Triggering and sending of an RLC status (STATUS) report:

An AM RLC entity sends a STATUS PDU to a peer AM RLC entity of the AM RLC entity to provide positive and/or negative acknowledgements for RLC SDUs (or some of the RLC SDUs). Triggers to initiate the RLC status report includes:
① receiving a poll from the peer AM RLC entity of the AM RLC entity, where it may be understood as that, when an RLC entity of a receiver receives an RLC SDU, a poll bit field in the RLC SDU is indicated to be "1", and a sequence number of the RLC SDU meets a condition, the RLC entity of the receiver triggers the RLC status report; and
② detecting a receiving failure of an RLC AMD PDU by the RLC entity of the receiver: When a t-Reassembly timer expires, the RLC entity of the receiver triggers the RLC status report.

That the RLC of the receiver detects the receiving failure of the RLC PDU may be understood as that the RLC of the receiver receives RLC PDUs with inconsecutive RLC sequence numbers (sequence numbers, SNs), or the RLC of the receiver receives inconsecutive RLC SDU segments. For example, if receiving RLC PDUs with RLC SNs of 1 and 3, but not receiving an RLC PDU with an RLC SN of 2, the RLC of the receiver may consider that the receiving failure of the RLC PDU with the RLC SN of 2 is detected. For another example, if receiving a first segment and a third segment of the RLC PDU with the RLC SN of 1, but not receiving a second segment of the RLC PDU, the RLC of the receiver may consider that a receiving failure of the second segment is detected.

t-Reassembly (a reassembly timer) is a timer maintained by an AM RLC receiver, and is used to perform detection of loss of RLC PDUs at a lower layer. When one t-Reassembly is running, no additional t-Reassembly is started. In other words, for each RLC entity, only one t-Reassembly runs at given time.

When detecting a receiving failure of an RLC PDU, the RLC of the receiver starts the t-Reassembly timer. For example, when a value of an SN following an SN of an RLC SDU that has a highest SN and that is received by the RLC of the receiver is greater than a value of an SN following an SN of an RLC SDU that is completely received by the RLC of the receiver, or the value of the SN following the SN of the RLC SDU that has the highest SN and that is received by the RLC of the receiver is equal to the value of the SN following the SN of the RLC SDU that is completely received by the RLC of the receiver but at least one segment is lost, the RLC of the receiver may start the t-Reassembly timer.

When the t-Reassembly timer expires, the RLC of the receiver considers that the RLC PDU is lost. The RLC of the receiver updates a related state variable, and may further restart the t-Reassembly timer. Therefore, the foregoing trigger condition ② may be understood as follows: When detecting that an RLC PDU is lost, the RLC of the receiver triggers the RLC status report.

When the RLC status report is triggered, a receiver of an AM RLC entity shall: if t-StatusProhibit does not run, at a 1^{st} transmission opportunity indicated by a lower layer, construct a STATUS PDU and submit the STATUS PDU to the lower layer; or otherwise (to be specific, t-StatusProhibit is running), after t-StatusProhibit expires, at a 1^{st} transmission opportunity indicated by a lower layer, construct a single STATUS PDU (even if the RLC status report is triggered a plurality of times while t-StatusProhibit is running) and submit the STATUS PDU to the lower layer.

t-StatusProhibit (a status prohibit timer) is a timer maintained by the AM RLC receiver, and is used to prohibit sending of the RLC status report.

It may be understood as that, to avoid frequently sending the RLC status report by the RLC of the receiver, it is specified that the RLC status report is not triggered during running of the t-StatusProhibit timer. A reason for avoiding frequently sending the RLC status report is as follows: Although the RLC of the receiver detects a receiving failure of an RLC PDU, the RLC PDU that fails to be received may be retransmitted at a lower layer (for example, a MAC layer). Therefore, repeated retransmission at the RLC layer can be avoided provided that retransmission at the lower layer succeeds. For details about retransmission at the MAC layer, refer to the descriptions of the HARQ process at the MAC layer in FIG. 3.

### 2. L1/L2-triggered switch (L1/L2-Triggered Mobility, LTM)

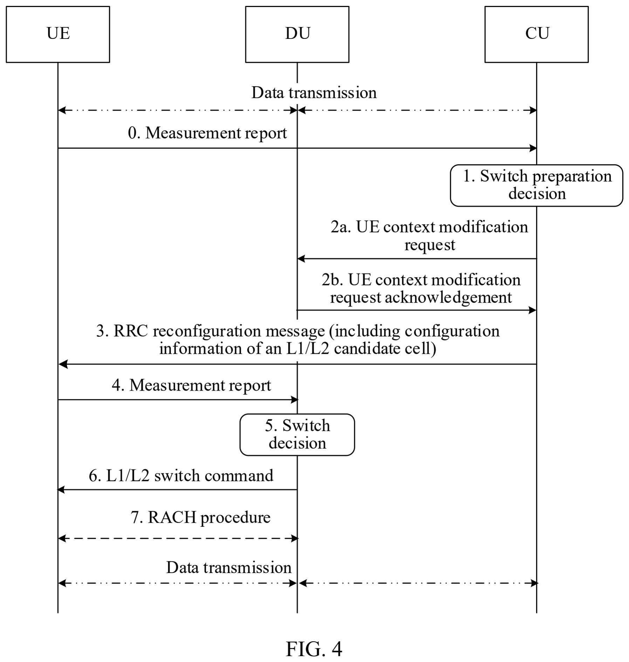

For a scenario in which a data amount is large or a scenario in which switch frequently occurs, to reduce switch delays and interruption time, and improve user experience of a terminal, layer 1/layer 2-triggered mobility is proposed in conventional technologies. The L1/L2-triggered mobility or L1/L2-triggered switch means indicating, by using L1 signaling (DCI) or L2 signaling (MAC CE), a terminal to perform switch. In the conventional technologies, L1/L2-triggered mobility is limited to switch within a same CU, including intra-CU inter-DU (intra-CU inter-DU) L1/L2 switch and intra-CU intra-DU (intra-CU intra-DU) L1/L2 switch. Main ideas/steps of the intra-CU intra-DU L1/L2 switch are shown in FIG. 4.

For example, FIG. 4 is a schematic flowchart of intra-CU intra-DU L1/L2 switch according to an embodiment of this application. Details are shown in FIG. 4.
0. UE performs data transmission with a source cell via a DU and a CU. In this procedure, the UE may send a measurement report to the CU via the DU. The measurement report may be an L3 measurement report.
1. The CU determines whether to perform L1/L2-triggered switch (that is, the CU makes a switch preparation decision). The CU may make the decision with reference to the measurement report reported by the UE.
2a. The CU requests (for example, by using a UE context modification request) the DU for adding a candidate cell.
2b. If the DU agrees, the DU responds to the CU with a UE context modification request acknowledgement message.
3. The CU sends LTM candidate configuration information to the UE (for example, by using an RRC reconfiguration message). The LTM candidate configuration information may include configuration information of one or more candidate cells. For each candidate cell, the configuration information may include an identifier, a configuration (for example, an access stratum (access stratum, AS) access configuration), and the like of the candidate cell. The LTM candidate configuration information may further include a configuration identifier corresponding to the configuration information of each candidate. After receiving the LTM candidate configuration information, the UE does not disconnect from the source cell.
4. The UE sends a measurement report to the DU. The measurement report may be an L1 measurement report.
5. The DU determines, based on the measurement report reported by the UE, to perform LTM switch, and determines a target cell.
6. The DU sends an LTM cell switch command by using MAC layer signaling (MAC CE) or physical layer signaling (DCI). The LTM cell switch command indicates the target cell or a configuration identifier of the target cell. The LTM cell switch command may also be referred to as an L1/L2 switch command.
7. The UE initiates a random access (random access channel, RACH) procedure to the target cell in the DU based on the target cell indicated in the LTM cell switch command, and subsequently performs data transmission with the target cell.

It may be understood that both the CU and the DU are parts of a network device, and may be considered as a network device. Therefore, the procedure shown in FIG. 4 may be represented as interaction between the UE and a network device. In this case, interaction between the CU and the DU is merely an internal interaction process of the network device.

It should be noted that, in an intra-CU inter-DU switch scenario, when switch from the source cell to the target cell is performed, an RLC entity changes. Therefore, RLC re-establishment may need to be performed during intra-CU inter-DU switch. However, in an intra-CU intra-DU switch scenario, because an RLC entity for the source cell and the target cell does not change, RLC re-establishment may not be performed during intra-CU intra-DU switch. This further reduces switch delays and interruption time. That is, RLC re-establishment may be performed or may not be performed during LTM switch. Whether to perform RLC re-establishment may be indicated to the UE in the LTM candidate configuration or the LTM cell switch command.

It may be understood that the RLC re-establishment means discarding all stored RLC SDUs and RLC PDUs, stopping all RLC timers, and resetting all state variables.

In a cell switch procedure, the terminal device and/or the network device may further perform MAC reset (MAC reset). The MAC reset includes initializing MAC state variables, clearing buffers (for example, a Msg3 or MsgA buffer), and canceling all procedures at a MAC layer (for example, a scheduling request procedure or an RLC status report buffering procedure).

It can be learned from the foregoing descriptions of the LTM that, in the LTM switch procedure (for example, the intra-CU intra-DU switch scenario), RLC re-establishment may not be performed. Not performing RLC re-establishment may be understood as/replaced with maintaining RLC unchanged, or not resetting the RLC entity, or not re-establishing the RLC entity. However, not re-establishing the RLC entity in the cell switch procedure may result in the following problem: Because the RLC entity remains unchanged, after the cell switch is completed, a RETX_COUNT counter used to count a quantity of retransmissions continues to count based on an original count value. The original count value may be understood as a reached or accumulated count value of the UE in the source cell. In this case, after the UE switches to the target cell and performs only a few retransmissions, an RLF may be triggered because the RETX_COUNT counter reaches a maximum value. This increases the transmission delay and service interruption time. For example, before performing LTM switch, in a process of transmission with the source cell, the UE has retransmitted an RLC SDU (for example, an RLC SDU #1) three times (that is, RETX_COUNT=3), and a maximum quantity of retransmissions is 4 (for example, maxRetxThreshold configured by a network=4). After the LTM switch is performed, because the RLC remains unchanged, RETX_COUNT of the RLC SDU #1 continues to count based on 3. After the UE transmits the RLC SDU #1 in the target cell and fails once, an RLF is triggered. However, in this case, the RLF triggered by the UE and a link interruption caused by the RLF are unnecessary, because the UE has switched to the target cell. Generally, signal quality of the target cell for switch is good, and is at least better than that of the source cell before the switch. Therefore, the UE does not need to consider that an RLF occurs because of one transmission failure of the RLC SDU #1.

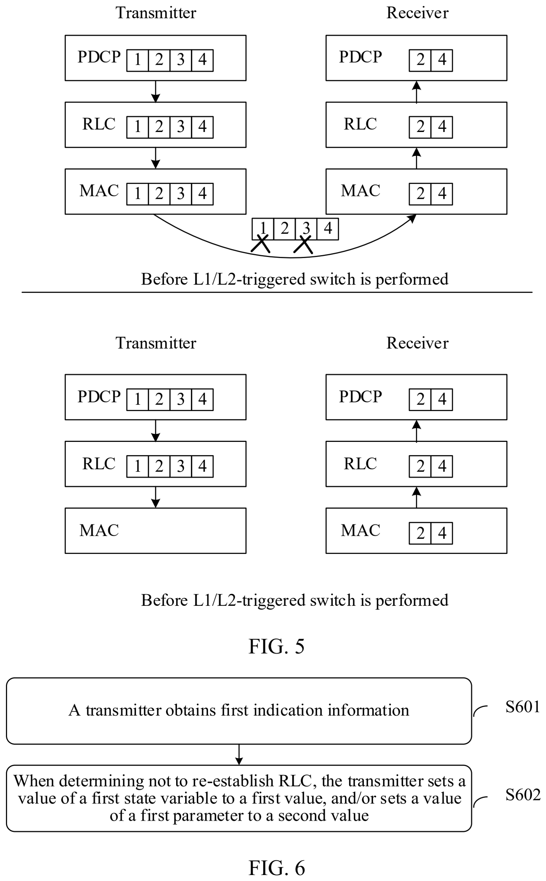

In addition, in the LTM switch procedure (for example, the intra-CU intra-DU switch scenario), RLC re-establishment may not be performed, and MAC may be reset. Resetting the MAC means clearing buffers at the MAC layer (as shown in FIG. 5, a MAC entity of a transmitter clears buffers at a MAC layer after switch). Consequently, a data packet cannot be retransmitted at the MAC layer. In addition, because the RLC entity cannot trigger an RLC status report in time, the data packet cannot be retransmitted. This is because RLC SDUs (for example, an RLC SDU #1 and an RLC SDU #3 in FIG. 5) that fail to be transmitted in the source cell can be retransmitted by an RLC entity of the transmitter only after an RLC entity of a receiver sends the RLC status report and the RLC entity of the transmitter receives the RLC status report after the switch to the target cell. However, the RLC status report triggered by the receiver needs to meet a condition. The condition includes waiting for a t-Reassembly timer and a t-StatusProhibit timer to expire. During a period of waiting for the timers to expire, the data packet cannot be transmitted. Consequently, the transmission delay is increased.

In view of this, this application provides a communication method, to reduce the transmission delay.

It should be noted that, in embodiments of this application, not re-establishing RLC may be alternatively described as maintaining the RLC, not re-establishing an RLC entity, maintaining the RLC entity, not performing RLC re-establishment, not resetting the RLC, or the like. This is not limited herein. For ease of understanding, an expression manner of "not re-establishing the RLC" is used for unified description below. Re-establishing the RLC may be alternatively described as not maintaining the RLC, re-establishing the RLC entity, not maintaining the RLC entity, performing RLC re-establishment, resetting the RLC, or the like. This is not limited herein. For ease of understanding, an expression manner of "re-establishing the RLC" is used for unified description below.

It should be noted that, in embodiments of this application, not resetting MAC may be alternatively described as maintaining the MAC, not resetting a MAC entity, maintaining the MAC entity, not performing MAC reset, or the like. This is not limited herein. For ease of understanding, an expression manner of "not resetting the MAC" is used for unified description below. Resetting the MAC may be alternatively described as not maintaining the MAC, resetting the MAC entity, not maintaining the MAC entity, performing MAC reset, or the like. This is not limited herein. For ease of understanding, an expression manner of "resetting the MAC" is used for unified description below.

In embodiments of this application, a transmitter is a sending party of a data unit or a data unit segment, and a receiver is a receiving party of the data unit or the data unit segment. In an implementation, the transmitter may be a network device, and the receiver is a terminal device. In other words, sending of a data unit or a data unit segment is downlink sending. In another implementation, the transmitter may be a terminal device, and the receiver may be a network device. In other words, sending of a data unit or a data unit segment is uplink sending.

The following describes in detail the communication method and the communication apparatus provided in this application.

It should be noted that "not re-establishing RLC" in an embodiment corresponding to FIG. 6 may also be understood as/alternatively described as one or more of the following: 1. setting a value of a first state variable to a first value; 2. storing a data unit stored in the RLC; 3. maintaining an RLC timer; 4. maintaining a second state variable; and 5. setting a value of a first parameter to a second value. The second state variable is an RLC state variable other than the first state variable.

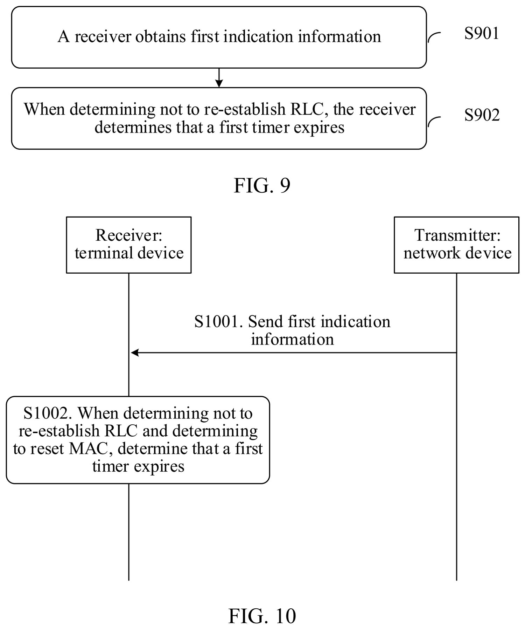

It should be noted that "not re-establishing RLC" in an embodiment corresponding to FIG. 9 may also be understood as/alternatively described as one or more of the following: 1. storing a data unit stored in the RLC; 2. maintaining an RLC timer; and 3. maintaining an RLC state variable.

It should be noted that "storing the data unit stored in the RLC" in embodiments of this application may be understood as not discarding an RLC data unit. The RLC data unit includes an RLC SDU, an RLC SDU segment, and an RLC PDU. Storing the data unit stored in the RLC may also be understood as storing all RLC data units, or may be understood as not discarding any RLC data unit.

"Maintaining the RLC timer" may be understood as not stopping or not resetting the RLC timer. The RLC timer may be understood as a timer that needs to be maintained by the RLC entity, or may be understood as a timer that needs to be used by the RLC entity and that is configured by a network. For example, the RLC timer may include, for example, ① a poll retransmission timer (t-PollRetransmit), used to retransmit a poll; ② a reassembly timer (t-Reassembly), used to perform detection of loss of data at a lower layer; and ③ a status prohibit timer (t-StatusProhibit), used to prohibit retransmission of a state variable. Maintaining the RLC timer may also be understood as maintaining all RLC timers, or not stopping or not resetting all RLC timers.

"Maintaining the RLC state variable" may be understood as not resetting the RLC state variable. The RLC state variable may be understood as a state variable maintained for implementing a function of the RLC entity, and may include a variable, a counter, or the like. For example, the RLC state variable may include, for example, ① an acknowledgement state variable (TX_Next_Ack), used to maintain a value of an SN of a next RLC SDU of an RLC SDU that has been acknowledged to be received in sequence; ② a send state variable (TX_Next), used to maintain a value of an SN to be assigned for a next newly generated AMD PDU; ③ a poll send state variable (POLL_SN), used to maintain a value of a highest SN of an AMD PDU in AMD PDUs submitted to a lower layer when POLL_SN is set; ④ a poll PDU counter (PDU_WITHOUT_POLL), used to count a quantity of AMD PDUs sent since a latest poll bit was sent; ⑤ a poll byte counter (BYTE_WITHOUT_POLL), used to count a quantity of data bytes sent since a latest poll bit was sent; and ⑥ a retransmission counter (RETX_COUNT), used to count a quantity of retransmissions of an RLC SDU or an RLC SDU segment. Optionally, the RLC state variable may further include another state variable that needs to be maintained by the RLC. Details are not listed one by one herein.

"Maintaining the second state variable" may be understood as not resetting the second state variable. The RLC state variable may be understood as a state variable maintained for implementing a function of the RLC entity, and may include a variable, a counter, or the like. For example, the second state variable may include: ① an acknowledgement state variable (TX_Next_Ack), used to maintain a value of an SN of a next RLC SDU of an RLC SDU that has been acknowledged to be received in sequence; ② a send state variable (TX_Next), used to maintain a value of an SN to be assigned for a next newly generated AMD PDU; ③ a poll send state variable (POLL _SN), used to maintain a value of a highest SN of an AMD PDU in AMD PDUs submitted to a lower layer when POLL_SN is set; ④ a poll PDU counter (PDU_WITHOUT _POLL), used to count a quantity of AMD PDUs sent since a latest poll bit was sent; and ⑤ a poll byte counter (BYTE_WITHOUT_POLL), used to count a quantity of data bytes sent since a latest poll bit was sent. Optionally, the second state variable may further include another state variable that needs to be maintained by the RLC. Details are not listed one by one herein.

Optionally, the embodiments shown in FIG. 6 and FIG. 9 may alternatively be combined. When the embodiments in FIG. 6 and FIG. 9 are combined, not re-establishing the RLC may be understood as one or more of the following: 1. setting the value of the first state variable to the first value; 2. storing the data unit stored in the RLC; 3. maintaining the RLC timer; 4. maintaining the second state variable; and 5. setting the value of the first parameter to the second value.

It may be understood that resetting MAC in embodiments of this application may be understood as one or more of the following: initializing MAC state variables, clearing buffers (for example, a Msg3 or MsgA buffer), and canceling all procedures at a MAC layer (for example, a scheduling request procedure or a status report buffering procedure). Resetting the MAC may also be understood as partially resetting the MAC or resetting a part of the MAC, for example, canceling all the procedures at the MAC layer (for example, the scheduling request procedure or the status report buffering procedure), clearing some of the buffers, and initializing some of the MAC state variables. For another example, a timing-related timer and the like may be maintained at the MAC layer.

The following separately describes the embodiments corresponding to FIG. 6 and FIG. 9.

FIG. 6 is a schematic flowchart of a communication method according to an embodiment of this application. As shown in FIG. 6, the communication method includes the following steps S601 and S602. A transmitter in FIG. 6 may be a transmitter, or may be a chip in the transmitter. It should be noted that FIG. 6 is a schematic flowchart of a method embodiment of this application, and shows detailed communication steps or operations of the method. However, these steps or operations are merely examples. Other operations or variants of various operations in FIG. 6 may further be performed in embodiments of this application. In addition, the steps in FIG. 6 may be separately performed in a sequence different from that shown in FIG. 6, and possibly, not all operations in FIG. 6 need to be performed.

S601. The transmitter obtains first indication information.

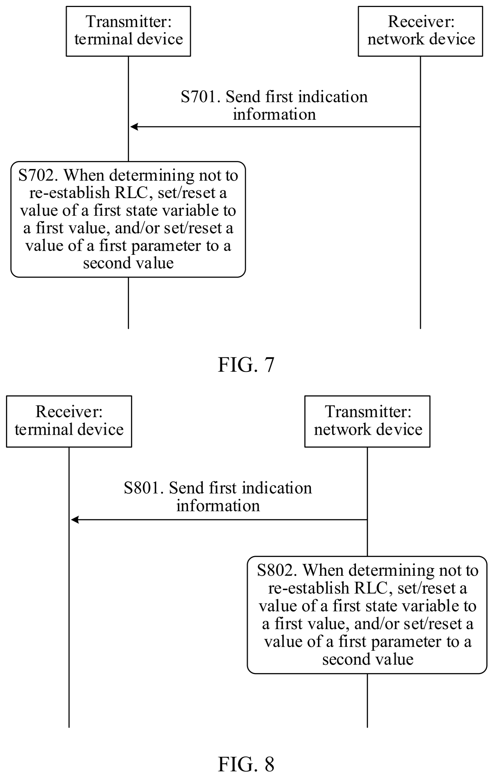

In a possible implementation, the transmitter is a terminal device. Correspondingly, a receiver is a network device. That the transmitter obtains the first indication information may be understood as follows: The terminal device receives the first indication information sent by the network device, as shown in S701 in FIG. 7.

In another possible implementation, the transmitter is a network device. Correspondingly, the receiver is a terminal device. That the transmitter obtains the first indication information may be understood as follows: The network device generates or determines the first indication information, and sends the first indication information to the terminal device, as shown in S801 in FIG. 8.

The first indication information indicates to perform layer 1/layer 2-triggered cell switch to a target cell, or the first indication information indicates to perform, to the target cell, layer 1/layer 2-triggered cell switch. For example, the first indication information may be an LTM switch command. Refer to step 6 in FIG. 4.

S602. When determining not to re-establish the RLC, the transmitter sets the value of the first state variable to a first value, and/or sets the value of the first parameter to the second value.

The first state variable is a state variable maintained by an RLC entity of the transmitter. The first state variable is used to count a quantity of retransmissions of a data unit or a data unit segment. Optionally, the first state variable may be a counter. Therefore, the first state variable may also be described as an RETX_COUNT counter. The data unit may also be described as an RLC SDU or an RLC PDU, and the data unit segment may also be described as an RLC SDU segment. Therefore, the setting the value of the first state variable to the first value may be alternatively described as setting the RETX_COUNT counter to the first value, and the first state variable being used to count a quantity of retransmissions of a data unit or a data unit segment may be alternatively described as the RETX_COUNT counter being used to count a quantity of retransmissions of an RLC SDU or an RLC SDU segment.

The first parameter is a parameter that can be configured by the network device. The first parameter is used to limit a quantity of retransmissions of a data unit or a data unit segment, or the first parameter is used to indicate a maximum quantity of retransmissions of the data unit or the data unit segment. Optionally, the first parameter may also be described as maxRetxThreshold. Therefore, setting the value of the first parameter to the second value may also be described as setting maxRetxThreshold to the second value, and the first parameter being used to limit a quantity of retransmissions of a data unit or a data unit segment may also be described as maxRetxThreshold being used to limit a quantity of retransmissions of an RLC SDU or an RLC SDU segment.

It may be understood that, in this embodiment of this application, determining not to re-establish the RLC may be specifically understood as determining not to re-establish the RLC and not to establish the RLC. Herein, establishing RLC means establishing a new RLC entity (briefly referred to as establishing new RLC). To be specific, in this embodiment, for an established RLC entity or an existing RLC entity of the transmitter, it is determined that a re-establishment procedure is not performed for the RLC entity. For example, when performing LTM switch, the transmitter determines not to perform RLC re-establishment for the RLC entity maintained by the transmitter.

In a possible implementation, when determining not to re-establish the RLC, in addition to setting the value of the first state variable to the first value and/or setting the value of the first parameter to the second value, the transmitter may further maintain another part of the RLC entity unchanged. For example, the transmitter may store the data unit stored in the RLC, maintain the RLC timer, and maintain the RLC state variable other than the first state variable (that is, maintain the second state variable). Correspondingly, when it is determined not to re-establish the RLC, the receiver needs to maintain the RLC unchanged. For example, the receiver may store the data unit stored in the RLC, maintain the RLC timer, and maintain an RLC state variable.

It may be understood that, when determining to re-establish the RLC, the transmitter and the receiver may discard the data unit stored in the RLC, stop/reset the RLC timer, initialize the RLC state variable, and the like.

For example, as shown in FIG. 7, that the transmitter is a terminal device is used as an example to describe in detail determining not to re-establish the RLC. Specifically, the terminal device may determine, according to the following three implementation solutions, not to re-establish the RLC.

Implementation solution (1): The terminal device receives second indication information sent by the network device, where the second indication information indicates not to re-establish the RLC. It may be understood that Implementation solution (1) may be alternatively described as follows: When receiving the second indication information, the transmitter sets the value of the first state variable to the first value, and/or sets the value of the first parameter to the second value.

For example, the second indication information may be 1 bit (bit). When a value of the second indication information is 0, it indicates not to re-establish the RLC, and when the value of the second indication information is 1, it indicates to re-establish the RLC; and vice versa. Alternatively, when the second indication information appears, it indicates to re-establish the RLC, and when the second indication information does not appear, it indicates not to re-establish the RLC; and vice versa.

Implementation solution (2): The terminal device may determine, based on first indication information, not to re-establish the RLC. For example, in addition to indicating to perform layer 1/layer 2-triggered cell switch to the target cell, the first indication information may further indicate not to re-establish the RLC. For another example, when determining that the target cell and a serving cell are associated with a same identifier, the terminal device may determine not to re-establish the RLC. For example, the terminal device may determine, based on the target cell or a configuration identifier of the target cell indicated in the first indication information, not to re-establish the RLC. It should be understood that, in Implementation solution (2), the network device may configure, for the terminal device, an association relationship between a cell and an identifier.

For example, the network device configures an identifier associated with one or more candidate cells. The identifier indicates or is used to control L2 reset, and the L2 reset may include one or both of MAC reset and RLC re-establishment. For example, the identifier is used to control whether to re-establish the RLC. When the target cell and the serving cell are associated with a same identifier, the terminal device does not perform RLC re-establishment. When the target cell and the serving cell are associated with different identifiers, the terminal device performs RLC re-establishment. The association relationship may be included in step 3 in FIG. 4.

For another example, the network device may configure one or more cell groups (or cell configuration groups). The cell group is used to control L2 reset, and the L2 reset may include one or both of MAC reset and RLC re-establishment. For example, the cell group is used to control whether to re-establish the RLC. When the target cell and the serving cell belong to a same cell group, the terminal device does not perform RLC re-establishment. When the target cell and the serving cell belong to different cell groups, the terminal device performs RLC re-establishment. A configuration of the cell group may be included in step 3 in FIG. 4.

Optionally, that the terminal device determines not to re-establish the RLC when determining that the target cell and the serving cell are associated with a same identifier may be replaced with that the terminal device determines not to re-establish the RLC when determining that the target cell and the serving cell belong to a same cell group.

It may be understood that, that the terminal device determines not to re-establish the RLC when determining that the target cell and the serving cell are associated with a same identifier means that the terminal device determines, based on a relationship between the target cell and the serving cell, not to re-establish the RLC. That the target cell and the serving cell are associated with a same identifier may be alternatively described as follows: The target cell and the serving cell belong to a same DU, and the like. This is not limited herein.

Optionally, when Implementation solution (2) is used, step S701 in FIG. 7 generally needs to be performed before step S702. Herein, the serving cell is a source cell that the terminal device switches from, or a cell in which the terminal device currently operates (or described as a cell that is serving the terminal device or that is being in data communication with the terminal device).

For example, the candidate cells configured by the network device include a cell 1, a cell 2, and a cell 3. An identifier associated with the cell 1 and the cell 2 is ID 1, and an identifier associated with the cell 3 is ID 2. It is assumed that a current serving cell of the terminal device is the cell 1, and the target cell indicated by the first indication information received by the terminal device is the cell 2. Because the cell 1 and the cell 2 are associated with a same identifier (that is, ID 1), the terminal device may determine not to re-establish the RLC. It is assumed that a current serving cell of the terminal device is the cell 1, and the target cell indicated by the first indication information received by the terminal device is the cell 3. Because the cell 1 and the cell 3 are associated with different identifiers, the terminal device may determine to re-establish the RLC.

For another example, the network device configures a group 1 and a group 2. An identifier of the group 1 is ID 1, and an identifier of the group 2 is ID 2. Cells in the group 1 include a cell 1, a cell 2, and a cell 3, and cells in the group 2 include a cell 4, a cell 5, and a cell 6. Optionally, it is assumed that, for a CU, there are two DUs: a DU 1 and a DU 2. The cells in the group 1 are cells in the DU 1, and the cells in the group 2 are cells in the DU 2. It is assumed that a current serving cell of the terminal device is the cell 1, and the target cell indicated by the first indication information received by the terminal device is the cell 2. Because the cell 1 and the cell 2 are associated with a same identifier (that is, ID 1) (or the cell 1 and the cell 2 belong to a same DU (that is, the DU 1), or the cell 1 and the cell 2 belong to a same group (that is, the group 1)), the terminal device may determine not to re-establish the RLC. It is assumed that a current serving cell of the terminal device is the cell 1, and the target cell indicated by the first indication information received by the terminal device is the cell 4. Because the cell 1 and the cell 4 are associated with different identifiers (or the cell 1 and the cell 2 belong to different DUs, or the cell 1 and the cell 2 belong to different groups), the terminal device may determine to re-establish the RLC.

It may be understood that Implementation solution (2) may be alternatively described as one or more of the following expression manners. Expression manner 1: When the target cell and the serving cell are associated with a same identifier, the transmitter sets the value of the first state variable to the first value, and/or sets the value of the first parameter to the second value. Expression manner 2: When the target cell and the serving cell belong to a same group, the transmitter sets the value of the first state variable to the first value, and/or sets the value of the first parameter to the second value. Expression manner 3: When the target cell and the serving cell belong to a same DU, the transmitter sets the value of the first state variable to the first value, and/or sets the value of the first parameter to the second value.

Implementation solution (3): An RLC entity of the terminal device receives a first request from an upper layer (for example, an RRC layer) of the terminal device or a lower layer (for example, a MAC layer) of the terminal device. The first request indicates not to re-establish the RLC. Optionally, the upper layer (for example, the RRC layer) may determine, according to Implementation 2, not to re-establish the RLC. The upper layer indicates a result of the determining to an RLC layer. Then, the RLC entity of the terminal device determines, based on indication information from the upper layer (for example, the RRC layer), not to re-establish the RLC. Optionally, Implementation solution (3) may be alternatively described as follows: When receiving the first request from an upper layer (for example, an RRC layer) of the transmitter or a lower layer (for example, a MAC layer) of the transmitter, an RLC entity of the transmitter sets the value of the first state variable to the first value, and/or sets the value of the first parameter to the second value.

Optionally, the foregoing three implementation solutions may be used in combination. For example, Implementation solution (1) and Implementation solution (2) may be used in combination, to be specific, the transmitter may determine, based on the identifier that is of the target cell and that is indicated in the first indication information and the second indication information, whether to re-establish the RLC. Specifically, when determining that the target cell and the serving cell are associated with a same identifier or belong to a same cell group, the transmitter determines, based on the second indication information, whether to re-establish the RLC. Alternatively, when determining that the target cell and the serving cell are associated with different identifiers or belong to different cell groups, the transmitter determines, based on the second indication information, whether to re-establish the RLC. In this case, the second indication information indicates whether to perform RLC re-establishment for a specific RLC entity.

For another example, as shown in FIG. 8, that the transmitter is a network device is used as an example to describe in detail determining not to re-establish the RLC. Specifically, the network device may specifically determine, according to the following three implementation solutions, not to re-establish the RLC.

Implementation solution I: The network device determines, based on an implementation of the network device, not to re-establish the RLC.

Implementation solution II: The network device may determine, based on first indication information, not to re-establish the RLC. For example, in addition to indicating to perform layer 1/layer 2-triggered cell switch to the target cell, the first indication information may further indicate not to re-establish the RLC. For another example, when determining that the target cell and a serving cell are associated with a same identifier, the network device may determine not to re-establish the RLC.

Implementation solution III: An RLC entity of the network device receives a first request from an upper layer (for example, an RRC layer) of the network device or a lower layer (for example, a MAC layer) of the network device. The first request indicates not to re-establish the RLC. Optionally, the upper layer (for example, the RRC layer) may determine, according to Implementation 2, not to re-establish the RLC. The upper layer indicates a result of the determining to the RLC layer. Then, the RLC entity of the network device determines, based on indication information from the upper layer (for example, the RRC layer), not to re-establish the RLC.

When the transmitter is a network device, regardless of which one of Implementation solution I to Implementation solution III is used, a sequence of performing step S801 and step S802 may not be limited. For example, step S801 may be performed before step S802, or step S801 may be performed after step S802. This is not limited herein.

In some feasible implementations, the setting the value of the first state variable to the first value may be resetting the value of the first state variable to the first value only when the value of the first state variable is greater than or equal to a first threshold. Correspondingly, when the value of the first state variable is less than the first threshold, the value of the first state variable may not be reset. Optionally, when the value of the first state variable is equal to the first threshold, the value of the first state variable may alternatively not be reset. This is not limited herein. For ease of understanding, the following mainly uses an example in which the value of the first state variable is reset to the first value when the value of the first state variable is equal to the first threshold for understanding.

For example, the first threshold is 5, and the first value is 0. It is assumed that a current value of the first state variable is 6. Because 6 is greater than 5, the value of the first state variable needs to be reset to 0. Alternatively, it is assumed that a current value of the first state variable is 5. Because 5 is equal to 5, the value of the first state variable needs to be reset to 0. Alternatively, it is assumed that a current value of the first state variable is 3. Because 3 is less than 5, the value of the first state variable does not need to be reset, that is, the value of the first state variable is 3.

A value of the first threshold may be configured by the network device, may be predefined in a protocol, or may be preconfigured. This is not limited in this embodiment of this application. Generally, the first threshold is an integer greater than or equal to 1. For example, the first value may be 0. Optionally, the first value may alternatively be M, and M is an integer greater than 0. A value of M may be configured by the network device, may be predefined in a protocol, or may be preconfigured. This is not limited in this embodiment of this application.

Generally, when the first value is 0, it may be understood as initializing the first state variable. When the first value is M, M may be less than an original value of the first state variable, to be specific, M is less than a current quantity of retransmissions (or M is less than a current count of the first state variable).

Optionally, considering that the transmitter also resets the first state variable to 0 when performing LTM switch and RLC re-establishment, in other words, when obtaining the first indication information and determining to re-establish the radio link control RLC, the transmitter resets the first state variable to 0. Therefore, the solution in this embodiment may be replaced with the following: The transmitter obtains the first indication information, and resets the first state variable to 0 or initializes the first state variable. That is, when performing LTM switch, the transmitter always resets the first state variable to 0 or initializes the first state variable. Optionally, in addition to resetting the first state variable to 0 or initializing the first state variable, the transmitter may further store the data unit stored in the RLC, maintain the RLC timer, maintain the RLC state variable other than the first state variable, and the like.

In some feasible implementations, the second value may be Q, where Q is an integer greater than 0. Optionally, Q may be specifically a positive integer greater than an original value of maxRetxThreshold, to be specific, Q is greater than a maximum quantity of retransmissions originally configured by the network device. It may be understood that a value of Q may be configured by the network device, may be predefined in a protocol, or may be preconfigured. This is not limited in this embodiment of this application.

For example, the transmitter is a terminal device, and the receiver is a network device. It is assumed that, before performing layer 1/layer 2-triggered cell switch, the terminal device has retransmitted an RLC SDU (for example, an RLC SDU #1) three times (that is, the first state variable is equal to 3), where the first parameter is equal to 4. After performing layer 1/layer 2-triggered cell switch or during the layer 1/layer 2-triggered cell switch, the terminal device may set the value of the first state variable to 0 (that is, the first state variable is equal to 0). Alternatively, the terminal device may set the value of the first parameter to 8 (that is, the first parameter is equal to 8). Alternatively, the terminal device may set the value of the first state variable to 0 (that is, the first state variable is equal to 0), and set the value of the first parameter to 8 (that is, the first parameter is equal to 8).

Optionally, when the transmitter is a terminal device and the receiver is a network device, when the terminal device determines not to re-establish the RLC, whether the value of the first state variable needs to be reset and/or whether the value of the first parameter needs to be extended may be indicated by the network device. For example, the network device delivers indication information (for example, for ease of differentiation, the indication information is described as fifth indication information below), and the fifth indication information indicates the terminal device to reset the first state variable and/or the first parameter or not. For example, a length of the fifth indication information is 2 bits (bits). When a value of the 2 bits is 10, it indicates to reset the first state variable and indicates not to extend the first parameter. When a value of the 2 bits is 01, it indicates not to reset the first state variable and indicates to extend the first parameter. When a value of the 2 bits is 11, it indicates to reset the first state variable and extend the first parameter. When a value of the 2 bits is 00, it indicates not to reset the first state variable and not to extend the first parameter. For another example, a length of the fifth indication information is 1 bit. When a value of the 1 bit is 1, it indicates to reset the first state variable. When a value of the 1 bit is 0, it indicates not to reset the first state variable. It should be understood that "not reset" in this application means maintaining a count value before the switch unchanged, and "not extend" means maintaining the original maximum quantity of RLC retransmissions unchanged.

In this embodiment of this application, during or after the LTM procedure, RETX_COUNT is reset and/or the maximum quantity of RLC retransmissions is extended, to avoid mistakenly triggering an RLF after the terminal device accesses the new target cell. This helps reduce a transmission delay. It may be understood that, maintaining the RLC entity unchanged except for resetting RETX_COUNT may further reduce interruption time of the LTM. Optionally, during or after the LTM procedure, considering factors such as a small difference between signal quality of the terminal device before and after the switch in some scenarios, the network device may control whether to reset RETX_COUNT and/or extend the maximum quantity of RLC retransmissions, and control a value after resetting or extension. This increases flexibility of network control.

FIG. 9 is another schematic flowchart of a communication method according to an embodiment of this application. As shown in FIG. 9, the communication method includes the following steps S901 and S902. A receiver in FIG. 9 may be a receiver, or may be a chip in the receiver. It should be noted that FIG. 9 is a schematic flowchart of a method embodiment of this application, and shows detailed communication steps or operations of the method. However, these steps or operations are merely examples. Other operations or variants of various operations in FIG. 9 may further be performed in embodiments of this application. In addition, the steps in FIG. 9 may be separately performed in a sequence different from that shown in FIG. 9, and possibly, not all operations in FIG. 9 need to be performed. Details are as follows.

S901. The receiver obtains first indication information.

In a possible implementation, a transmitter is a terminal device. Correspondingly, the receiver is a network device. That the receiver obtains the first indication information may be understood as follows: The network device generates or determines the first indication information, and sends the first indication information to the terminal device, as shown in S1001 in FIG. 10.

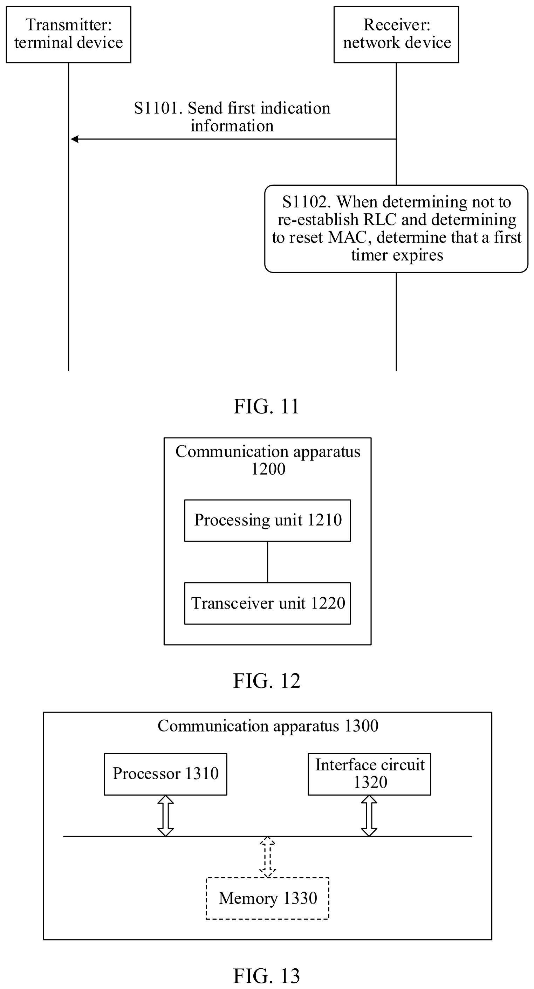

In another possible implementation, the transmitter is a network device. Correspondingly, the receiver is a terminal device. That the receiver obtains the first indication information may be understood as follows: The terminal device receives the first indication information sent by the network device, as shown in S1101 in FIG. 11.

The first indication information indicates to perform layer 1/layer 2-triggered cell switch to a target cell, or the first indication information indicates to perform, to the target cell, layer 1/layer 2-triggered cell switch. For example, the first indication information may be a layer 1/layer 2 switch command.

S902. When determining not to re-establish RLC, the receiver determines that a first timer expires.

The first timer may be used to perform detection of loss of a data unit at a lower layer. For example, the first timer may be t-Reassembly.

It may be understood that, in the embodiment corresponding to FIG. 9, the determining not to re-establish the RLC may be specifically determining not to re-establish the RLC and determining to reset MAC.

Optionally, determining that the first timer expires in this embodiment of this application may be specifically determining that the first timer and a second timer expire. The second timer is used to prohibit sending of an RLC status report. For example, the second timer may be t-StatusProhibit.

Optionally, "determining that the first timer expires" may also be understood as/alternatively described as stopping the first timer, and "determining that the second timer expires" may also be understood as/alternatively described as "stopping the second timer".

For example, as shown in FIG. 10, that the transmitter is a network device is used as an example to describe in detail determining not to re-establish the RLC and determining to reset the MAC. Specifically, there are the following six implementation solutions in which the terminal device determines not to re-establish the RLC and determines to reset the MAC.

Implementation solution ①: The terminal device receives third indication information and fourth indication information that are sent by the network device. The third indication information indicates not to re-establish the RLC, and the fourth indication information indicates to reset the MAC. Therefore, the terminal device may determine, based on the received third indication information, not to re-establish the RLC, and determine, based on the received fourth indication information, to reset the MAC. Optionally, the third indication information and the fourth indication information may be carried in a same message, or the third indication information and the fourth indication information may be carried in different messages. This is not limited herein. It may be understood that Implementation solution ① may be alternatively described as follows: When receiving the third indication information and the fourth indication information, a receiver determines that the first timer expires.

Implementation solution ②: Based on the first indication information, the terminal device may determine not to re-establish the RLC and determine to reset the MAC. For example, in addition to indicating to perform layer 1/layer 2-triggered cell switch to the target cell, the first indication information may further indicate not to re-establish the RLC and indicate to reset the MAC. For another example, when determining that the target cell and a serving cell are associated with a same identifier, the terminal device may determine not to re-establish the RLC and determine to reset the MAC. For example, based on the target cell or a configuration identifier of the target cell indicated in the first indication information, the terminal device may determine not to re-establish the RLC and determine to reset the MAC. It should be understood that, in Implementation solution ②, the network device may preconfigure, for the terminal device, an association relationship between a cell and an identifier.

For example, the network device configures an identifier associated with one or more candidate cells. The identifier indicates or is used to control L2 reset, and the L2 reset may include one or both of MAC reset and RLC re-establishment. For example, the identifier is used to control whether to re-establish the RLC and whether to reset the MAC. When the target cell and the serving cell are associated with a same identifier, the terminal device does not re-establish the RLC and resets the MAC. When the target cell and the serving cell are associated with different identifiers, the terminal device re-establishes the RLC and resets the MAC. The association relationship may be included in step 3 in FIG. 4.

For another example, the network device may configure one or more cell groups (or cell configuration groups). The cell group is used to control L2 reset, and the L2 reset may include one or both of MAC reset and RLC re-establishment. For example, the cell group is used to control whether to re-establish the RLC and whether to reset the MAC. When the target cell and the serving cell belong to a same cell group, the terminal device does not re-establish the RLC and resets the MAC. When the target cell and the serving cell belong to different cell groups, the terminal device re-establishes the RLC and resets the MAC. A configuration of the cell group may be included in step 3 in FIG. 4. That the terminal device determines not to re-establish the RLC and determines to reset the MAC when determining that the target cell and the serving cell are associated with a same identifier may be replaced with that the terminal device determines not to re-establish the RLC and determines to reset the MAC when determining that the target cell and the serving cell belong to a same cell group.

It may be understood that, that the terminal device determines not to re-establish the RLC and determines to reset the MAC when determining that the target cell and the serving cell are associated with a same identifier means that based on a relationship between the target cell and the serving cell, the terminal device determines not to re-establish the RLC and determines to reset the MAC. That the target cell and the serving cell are associated with a same identifier may be alternatively described as follows: The target cell and the serving cell belong to a same DU, and the like. This is not limited herein.

Optionally, when Implementation solution ② is used, step S1001 in FIG. 10 needs to be performed before step S1002. Herein, the serving cell is a source cell that the terminal device switches from, or a cell in which the terminal device currently operates (or described as a cell that is serving the terminal device or that is being in data communication with the terminal device).

For example, the candidate cells configured by the network device include a cell 1, a cell 2, and a cell 3. An identifier associated with the cell 1 and the cell 2 is ID 1, and an identifier associated with the cell 3 is ID 2. It is assumed that a current serving cell of the terminal device is the cell 1, and the target cell indicated by the first indication information received by the terminal device is the cell 2. Because the cell 1 and the cell 2 are associated with a same identifier (that is, ID 1), the terminal device may determine not to re-establish the RLC and determine to reset the MAC. It is assumed that a current serving cell of the terminal device is the cell 1, and the target cell indicated by the first indication information received by the terminal device is the cell 3. Because the cell 1 and the cell 3 are associated with different identifiers, the terminal device may determine to re-establish the RLC and reset the MAC.

For another example, the network device configures a group 1 and a group 2. An identifier of the group 1 is ID 1, and an identifier of the group 2 is ID 2. Cells in the group 1 include a cell 1, a cell 2, and a cell 3, and cells in the group 2 include a cell 4, a cell 5, and a cell 6. Optionally, it is assumed that, for a CU, there are two DUs: a DU 1 and a DU 2. The cells in the group 1 are cells in the DU 1, and the cells in the group 2 are cells in the DU 2. It is assumed that a current serving cell of the terminal device is the cell 1, and the target cell indicated by the first indication information received by the terminal device is the cell 2. Because the cell 1 and the cell 2 are associated with a same identifier (that is, ID 1) (or the cell 1 and the cell 2 belong to a same DU (that is, the DU 1), or the cell 1 and the cell 2 belong to a same group (that is, the group 1)), the terminal device may determine not to re-establish the RLC and determine to reset the MAC. It is assumed that a current serving cell of the terminal device is the cell 1, and the target cell indicated by the first indication information received by the terminal device is the cell 4. Because the cell 1 and the cell 4 are associated with different identifiers (or the cell 1 and the cell 2 belong to different DUs, or the cell 1 and the cell 2 belong to different groups), the terminal device may determine to re-establish the RLC and reset the MAC.

It may be understood that Implementation solution ② may be alternatively described as one or more of the following expression manners. Expression manner 1: When the target cell and the serving cell are associated with a same identifier, the receiver determines that the first timer expires. Expression manner 2: When the target cell and the serving cell belong to a same group, the receiver determines that the first timer expires. Expression manner 3: When the target cell and the serving cell belong to a same DU, the receiver determines that the first timer expires.

Implementation solution ③: The terminal device may determine not to re-establish the RLC when determining that the target cell and the serving cell are associated with a same first identifier, and determine to reset the MAC when determining that the target cell and the serving cell are associated with different second identifiers.

For example, the network device configures the first identifier and the second identifier associated with the one or more candidate cells. The first identifier or the second identifier indicates or is used to control L2 reset, and the L2 reset may include one or both of MAC reset and RLC re-establishment. For example, the first identifier is used to control whether to re-establish the RLC. When the target cell and the serving cell are associated with a same first identifier, the terminal device does not perform RLC re-establishment. When the target cell and the serving cell are associated with different first identifiers, the terminal device performs RLC re-establishment. For example, the second identifier is used to control whether to reset the MAC. When the target cell and the serving cell are associated with a same second identifier, the terminal device does not perform MAC reset. When the target cell and the serving cell are associated with different second identifiers, the terminal device performs MAC reset. The association relationship may be included in step 3 in FIG. 4.

For another example, the network device may configure one or more first cell groups (or first cell configuration groups) and one or more second cell groups (or second cell configuration groups). The first cell group or the second cell group is used to control L2 reset, and the L2 reset may include one or both of MAC reset and RLC re-establishment. For example, the first cell group is used to control whether to re-establish the RLC. When the target cell and the serving cell belong to a same first cell group, the terminal device does not perform RLC re-establishment. When the target cell and the serving cell belong to different first cell groups, the terminal device performs RLC re-establishment. For example, the second cell group is used to control whether to reset the MAC. When the target cell and the serving cell belong to a same second cell group, the terminal device does not perform MAC reset. When the target cell and the serving cell belong to different second cell groups, the terminal device performs MAC reset. A configuration of the first cell group or the second cell group may be included in step 3 in FIG. 4.

Optionally, that the terminal device determines not to re-establish the RLC when determining that the target cell and the serving cell are associated with a same first identifier may be replaced with that the terminal device determines not to re-establish the RLC when determining that the target cell and the serving cell belong to a same first cell group. That the terminal device determines not to reset the MAC when determining that the target cell and the serving cell are associated with a same second identifier may be replaced with that the terminal device determines not to reset the MAC when determining that the target cell and the serving cell belong to a same second cell group.

It may be understood that Implementation solution ③ may be alternatively described as follows: When the target cell and the serving cell are associated with a same first identifier, and the target cell and the serving cell are associated with different second identifiers, the receiver determines that the first timer expires. Alternatively, when the target cell and the serving cell belong to a same first cell group, and the target cell and the serving cell belong to different second cell groups, the receiver determines that the first timer expires.

Implementation solution ④: The terminal device receives the third indication information sent by the network device, and determines, based on the third indication information, not to re-establish the RLC. In addition, the terminal device resets the MAC by default. It may be understood that Implementation solution ④ may be alternatively described as follows: When receiving the third indication information, the receiver determines that the first timer expires.

Implementation solution ⑤: When determining that the target cell and the serving cell are associated with a same identifier, the terminal device determines not to re-establish the RLC. For details, refer to related descriptions, in Implementation solution (2) in the embodiment in FIG. 7, of determining, by the terminal device, that the target cell and the serving cell are associated with a same identifier. Details are not described herein again. In addition, the terminal device resets the MAC by default. Optionally, Implementation solution ⑤ may be alternatively described as follows: When the target cell and the serving cell are associated with a same identifier, the receiver determines that the first timer expires.

That the terminal device resets the MAC by default may be understood as follows: When being indicated to perform LTM cell switch (for example, receiving the first indication information), the terminal device resets the MAC.

Implementation solution ⑥: An RLC entity of the terminal device receives a first request from an upper layer (for example, an RRC layer) of the terminal device or a lower layer (for example, a MAC layer) of the terminal device, and/or a MAC entity of the terminal device receives a second request from the upper layer (for example, the RRC layer or an RLC layer) of the terminal device. The first request indicates not to re-establish the RLC, and the second request indicates to reset the MAC. Optionally, the upper layer (for example, the RRC layer) may determine, according to Implementation 2, not to re-establish the RLC. The upper layer indicates a result of the determining to the RLC layer. Then, the RLC entity of the terminal device determines, based on indication information from the upper layer (for example, the RRC layer), not to re-establish the RLC. It may be understood that Implementation solution ⑥ may be alternatively described as follows: When an RLC entity of the receiver receives the first request from an upper layer (for example, an RRC layer) of the receiver or a lower layer (for example, a MAC layer) of the receiver, and/or a MAC entity of the receiver receives the second request from the upper layer (for example, the RRC layer or an RLC layer) of the receiver, it is determined that the first timer expires.

For another example, as shown in FIG. 11, that the transmitter is a terminal device is used as an example to describe in detail determining not to re-establish the RLC and determining to reset the MAC. Specifically, there are the following five implementation solutions in which the network device determines not to re-establish the RLC and determines to reset the MAC.

Implementation solution 1: Based on an implementation of the network device, the network device determines not to re-establish the RLC and determines to reset the MAC.

Implementation solution 2: Based on the first indication information, the network device may determine not to re-establish the RLC and determine to reset the MAC. For example, the first indication information may further indicate not to re-establish the RLC and indicate to reset the MAC. For another example, when determining the target cell and the serving cell are associated with a same identifier, the network device may determine not to re-establish the RLC and determine to reset the MAC. Optionally, that the target cell and the serving cell are associated with a same identifier may be alternatively described as follows: The target cell and the serving cell belong to a same DU, the target cell and the serving cell belong to a same group, or the like. For details, refer to related descriptions in FIG. 8. Details are not described herein again. It may be understood that Implementation solution 2 may be alternatively described as follows: When determining that the target cell and the serving cell are associated with a same identifier, the receiver determines that the first timer expires.

Implementation solution 3: The network device determines, based on the implementation of the network device, not to re-establish the RLC, and the network device resets the MAC by default.

Implementation solution 4: When determining that the target cell and the serving cell are associated with a same identifier, the network device determines not to re-establish the RLC, and the network device resets the MAC by default.

It may be understood that, that the network device resets the MAC by default may be understood as follows: When performing LTM cell switch, the network device resets the MAC.

Implementation solution 5: An RLC entity of the network device receives a first request from an upper layer (for example, an RRC layer) of the network device or a lower layer (for example, a MAC layer) of the network device, and/or a MAC entity of the network device receives a second request from the upper layer (for example, the RRC layer or an RLC layer) of the network device. The first request indicates not to re-establish the RLC, and the second request indicates to reset the MAC. Optionally, the upper layer (for example, the RRC layer) may determine, according to Implementation 2, not to re-establish the RLC. The upper layer indicates a result of the determining to the RLC layer. Then, the RLC entity of the network device determines, based on indication information from the upper layer (for example, the RRC layer), not to re-establish the RLC. It may be understood that Implementation solution ⑤ may be alternatively described as follows: When an RLC entity of the receiver receives the first request from an upper layer (for example, an RRC layer) of the receiver or a lower layer (for example, a MAC layer) of the receiver, and/or a MAC entity of the receiver receives the second request from the upper layer (for example, the RRC layer or an RLC layer) of the receiver, it is determined that the first timer expires.

For example, the transmitter is a network device, and the receiver is a terminal device. By receiving third indication information and fourth indication information that are sent by the network device, the terminal device may determine not to re-establish the RLC and determine to reset the MAC (that is, Implementation ①). For example, the third indication information and the fourth indication information each may be 1 bit (bit), and there are a total of 2 bits. When a value of the 2 bits is 10, it indicates not to re-establish the RLC and not to reset the MAC. When a value of the 2 bits is 01, it indicates to re-establish the RLC and reset the MAC. When a value of the 2 bits is 11, it indicates not to re-establish the RLC and indicates to reset the MAC. When a value of the 2 bits is 00, it indicates to re-establish the RLC and indicates not to reset the MAC.

In this embodiment of this application, re-establishing the RLC may be understood as one or more of the following: discarding a data unit stored in the RLC, stopping an RLC timer, initializing an RLC state variable, and the like. Not resetting the MAC may be understood as one or more of the following: not initializing MAC state variables, not clearing buffers (for example, a Msg3 or MsgA buffer), not canceling all procedures at the MAC layer (for example, a scheduling request procedure or a status report buffering procedure), and the like.

Optionally, when the transmitter is a terminal device, and the receiver is a network device, regardless of which one of Implementation solution 1 to Implementation solution 5 is used, a sequence of performing step S1101 and step S1102 may not be limited. For example, step S1101 may be performed before step S1102, or step S1101 may be performed after step S1102. This is not limited herein.

In this embodiment of this application, when t-Reassembly of RLC of the receiver is running, it indicates that an RLC SDU or an RLC SDU segment in a buffer of the receiver is not consecutive. In other words, the receiver has an RLC SDU or an RLC SDU segment that is expected to be retransmitted by the transmitter. However, because all MAC buffers of the transmitter are cleared due to MAC reset, only an RLC entity of the transmitter can perform retransmission. In this case, if the t-Reassembly timer is considered to expire or t-Reassembly is stopped (and further, t-StatusProhibit is considered to expire or t-StatusProhibit is stopped), an RLC status report can be triggered in time. This accelerates retransmission of the RLC SDU, and helps reduce a transmission delay.

The following describes in detail communication apparatuses provided in this application with reference to FIG. 12 and FIG. 13.

It may be understood that, to implement functions in the foregoing embodiments, the communication apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 12 and FIG. 13 are diagrams of possible structures of communication apparatuses according to embodiments of this application. These communication apparatuses may be configured to implement functions of the transmitter or the receiver in the foregoing method embodiments. Therefore, beneficial effects of the foregoing method embodiments can also be implemented. In embodiments of this application, the transmitter or the receiver may be one of the terminal devices 120a to 120j shown in FIG. 1, or may be the network device 110a or 110b shown in FIG. 1, or may be a module (for example, a chip) used in a terminal device or a network device.

As shown in FIG. 12, a communication apparatus 1200 includes a processing unit 1210 and a transceiver unit 1220.

When the communication apparatus 1200 is configured to implement the function of the transmitter in the method embodiment shown in FIG. 6,
the transceiver unit is configured to obtain first indication information, where the first indication information indicates to perform layer 1/layer 2-triggered cell switch to a target cell; and
the processing unit is configured to: when determining not to re-establish radio link control RLC, set a value of a first state variable to a first value, where the first state variable is used to count a quantity of retransmissions of a data unit or a data unit segment, and/or when determining not to re-establish the RLC, set a value of a first parameter to a second value, where the first parameter is used to limit a quantity of retransmissions of a data unit or a data unit segment.

When the communication apparatus 1200 is configured to implement the function of the receiver in the method embodiment shown in FIG. 13,
the transceiver unit is configured to obtain first indication information, where the first indication information indicates to perform layer 1/layer 2-triggered cell switch to a target cell; and
the processing unit is configured to: when determining not to re-establish radio link control RLC, determine that a first timer expires, where the first timer is used to perform detection of loss of a data unit at a lower layer.

For more detailed descriptions of the processing unit 1210 and the transceiver unit 1220, refer to related descriptions in the method embodiments shown in FIG. 6 and FIG. 13.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data needed by the processor 1310 to run the instructions, or store data generated after the processor 1310 runs the instructions.

When the communication apparatus 1300 is configured to implement the methods shown in FIG. 6 and FIG. 13, the processor 1310 is configured to implement a function of the processing unit 1210, and the interface circuit 1320 is configured to implement a function of the transceiver unit 1220.

When the communication apparatus is a chip used in a terminal device, the chip in the terminal device implements a function of the terminal device in the foregoing method embodiments. The chip in the terminal device receive, via another module (for example, a radio frequency module or an antenna) in the terminal device, information sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device may be a baseband chip in the network device, may be a CU, a DU, or another module, or may be an apparatus in an open radio access network (open radio access network, O-RAN) architecture, for example, an apparatus like an open CU or an open DU.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in a network device or a terminal device. Alternatively, the processor and the storage medium may exist in a network device or a terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile storage medium or a non-volatile storage medium, or may include both a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving first indication information; and resetting a value of a first state variable to a first value or initializing the first state variable to the first value, wherein the first indication information indicates to perform layer 1/layer 2-triggered cell switch to a target cell, and the first state variable is used to count a quantity of retransmissions of a data unit or a data unit segment, and/or when determining not to re-establish RLC, setting a value of a first parameter to a second value, wherein the first parameter is used to limit a quantity of retransmissions of a data unit or a data unit segment.

2. The method according to claim 1, wherein the method further comprises:
storing a data unit stored in the RLC, maintaining an RLC timer, and maintaining an RLC state variable other than the first state variable.

3. The method according to claim 1 or 2, wherein the method further comprises:
receiving an identifier associated with one or more candidate cells, wherein the identifier is used to control whether to re-establish the RLC; and
when an identifier associated with the target cell is different from an identifier associated with a serving cell, performing RLC re-establishment.

4. The method according to any one of claims 1 to 3, wherein the method further comprises:
when the target cell and the serving cell are associated with a same identifier, determining not to re-establish the RLC.

5. The method according to any one of claims 1 to 4, wherein the setting the value of the first state variable to the first value comprises:
when the value of the first state variable is greater than or equal to a first threshold, setting the value of the first state variable to the first value.

6. The method according to any one of claims 1 to 5, wherein the first value is 0.

7. The method according to any one of claims 1 to 6, wherein the second value is an integer greater than 0.

8. The method according to any one of claims 2 to 7, wherein the method further comprises:
when determining to re-establish the RLC, discarding the data unit stored in the RLC, stopping or resetting the RLC timer, and initializing an RLC state variable.

9. The method according to claims 3 to 8, wherein an association relationship between the candidate cell and the identifier associated with the candidate cell is comprised in layer 1/layer 2-triggered mobility LTM candidate configuration information.

10. The method according to any one of claims 1 to 9, wherein the first indication information is an LTM switch command.

11. A communication system, comprising a terminal device and a network device, wherein
the network device sends first indication information, wherein the first indication information indicates to perform layer 1/layer 2-triggered cell switch to a target cell; and
the terminal device resets a value of a first state variable to a first value or initializes the first state variable to the first value, wherein the first state variable is used to count a quantity of retransmissions of a data unit or a data unit segment, and/or when determining not to re-establish RLC, the terminal device sets a value of a first parameter to a second value, wherein the first parameter is used to limit a quantity of retransmissions of a data unit or a data unit segment.

12. The method according to claim 11, wherein the method further comprises:
storing, by the terminal device, a data unit stored in the RLC, maintaining an RLC timer, and maintaining an RLC state variable other than the first state variable.

13. The method according to claim 11 or 12, wherein the method further comprises:
sending, by the network device, an identifier associated with one or more candidate cells, wherein the identifier is used to control whether to re-establish the RLC; and
when an identifier associated with the target cell is different from an identifier associated with a serving cell, performing, by the terminal device, RLC re-establishment.

14. The method according to any one of claims 11 to 13, wherein the method further comprises:
when the target cell and the serving cell are associated with a same identifier, determining, by the terminal device, not to re-establish the RLC.

15. The method according to any one of claims 11 to 14, wherein the setting the value of the first state variable to the first value comprises:
when the value of the first state variable is greater than or equal to a first threshold, setting, by the terminal device, the value of the first state variable to the first value.

16. The method according to any one of claims 11 to 15, wherein the first value is 0.

17. The method according to any one of claims 11 to 16, wherein the second value is an integer greater than 0.

18. The method according to any one of claims 12 to 17, wherein the method further comprises:
when determining to re-establish the RLC, discarding, by the terminal device, the data unit stored in the RLC, stopping or resetting the RLC timer, and initializing an RLC state variable.

19. The method according to claims 13 to 18, wherein an association relationship between the candidate cell and the identifier associated with the candidate cell is comprised in layer 1/layer 2-triggered mobility LTM candidate configuration information.

20. The method according to any one of claims 11 to 19, wherein the first indication information is an LTM switch command.

21. A communication method, comprising:
receiving first indication information, wherein the first indication information indicates to perform layer 1/layer 2-triggered cell switch to a target cell; and
when determining not to re-establish radio link control RLC, determining that a first timer expires, wherein the first timer is used to perform detection of loss of a data unit at a lower layer.

22. The method according to claim 21, wherein the determining not to re-establish the RLC is specifically:
determining not to re-establish the RLC and determining to reset medium access control MAC.

23. The method according to claim 21 or 22, wherein the determining that the first timer expires is specifically:
determining that the first timer and a second timer expire, wherein the second timer is used to prohibit sending of an RLC status report.

24. The method according to any one of claims 21 to 23, wherein the method further comprises:
obtaining third indication information, wherein the third indication information indicates not to re-establish the RLC; or
when the target cell and a serving cell are associated with a same identifier, determining not to re-establish the RLC.

25. The method according to any one of claims 22 to 24, wherein the method further comprises:
obtaining fourth indication information, wherein the fourth indication information indicates to reset the MAC; or
when the target cell and the serving cell are associated with a same identifier, determining to reset the MAC.

26. A communication system, comprising a terminal device and a network device, wherein
the network device sends first indication information, wherein the first indication information indicates to perform layer 1/layer 2-triggered cell switch to a target cell; and
when determining not to re-establish radio link control RLC, the terminal device determines that a first timer expires, wherein the first timer is used to perform detection of loss of a data unit at a lower layer.

27. The method according to claim 26, wherein the determining not to re-establish the RLC is specifically:
determining not to re-establish the RLC and determining to reset medium access control MAC.

28. The method according to claim 26 or 27, wherein the determining that the first timer expires is specifically:
determining that the first timer and a second timer expire, wherein the second timer is used to prohibit sending of an RLC status report.

29. The method according to any one of claims 26 to 28, wherein the method further comprises:
obtaining, by the terminal device, third indication information, wherein the third indication information indicates not to re-establish the RLC; or
when the target cell and a serving cell are associated with a same identifier, determining, by the terminal device, not to re-establish the RLC.

30. The method according to any one of claims 27 to 29, wherein the method further comprises:
obtaining, by the terminal device, fourth indication information, wherein the fourth indication information indicates to reset the MAC; or
when the target cell and the serving cell are associated with a same identifier, determining, by the terminal device, to reset the MAC.

31. A communication apparatus, comprising:
a transceiver unit, configured to receive first indication information, wherein the first indication information indicates to perform layer 1/layer 2-triggered cell switch to a target cell; and
a processing unit, configured to: reset a value of a first state variable to a first value or initialize the first state variable to the first value, wherein the first state variable is used to count a quantity of retransmissions of a data unit or a data unit segment, and/or when determining not to re-establish RLC, set a value of a first parameter to a second value, wherein the first parameter is used to limit a quantity of retransmissions of a data unit or a data unit segment.

32. A communication apparatus, comprising:
a transceiver unit, configured to receive first indication information, wherein the first indication information indicates to perform layer 1/layer 2-triggered cell switch to a target cell; and
a processing unit, configured to: when determining not to re-establish radio link control RLC, determine that a first timer expires, wherein the first timer is used to perform detection of loss of a data unit at a lower layer.

33. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 10 or the method according to any one of claims 21 to 25 by using a logic circuit or by executing code instructions.

34. A computer-readable storage medium, wherein the storage medium stores a computer program or instructions, and when the computer program or the instructions are executed by a communication apparatus, the method according to any one of claims 1 to 10 or the method according to any one of claims 21 to 25 is implemented.

35. A computer program product, comprising computer program code, wherein when the computer program code is run on a computer, the method according to any one of claims 1 to 10 or the method according to any one of claims 21 to 25 is implemented.

36. A communication system, comprising a communication apparatus configured to implement the method according to any one of claims 1 to 10 and a communication apparatus configured to implement the method according to any one of claims 21 to 25.
